# EUROPEAN PATENT SPECIFICATION

(11) **EP 1 142 435 B1**
(45) Date of publication and mention of the grant of the patent: **16.08.2006**
(21) Application number: 99963810.9
(22) Date of filing: 07.12.1999
(51) Int. Cl.: H04Q 11/04, H04L 12/56

(54) **DATA TRANSMISSION SYSTEM ADAPTED TO PROVIDE INTERWORKING BETWEEN RSVP AND MPLS**
ZUR HERSTELLUNG VON KOMPABILITÄT VON RSVP MIT MPLS ANGEPASSTES DATENÜBERTRAGUNGSSYSTEM
SYSTEME DE TRANSMISSION DE DONNEES PERMETTANT UN FONCTIONNEMENT ENTRE DES MECANISMES RSVP ET MPLS

(30) Priority: 15.12.1998 SE 9804320
(43) Date of publication of application: 10.10.2001
(73) Proprietor: Telia AB (publ), 123 86 Farsta (SE)
(72) Inventor: KAVAK, Nail, S-143 32 Varby (SE)
(74) Representative: Hopfgarten, Nils
(86) International application number: PCT/SE1999/002278
(87) International publication number: WO 2000/036871

(56) References cited:
- EP-A2- 0 790 751
- GB-A- 2 320 159
- VISWANATHAN ET AL.: 'Soft State Switching A Proposal to Extend RSVP for Switching RSVP Flows', [Online] August 1997, pages 1 - 11, XP002927481 Retrieved from the Internet: <URL:http://infonet.aist-nara.ac.jp/member/ nori-d/mlr/id/draft-viswanathan-mpls-rsvp-0 0.txt> [retrieved on 2000-04-15]
- DAVIE ET AL.: 'Use of Label Switching With RSVP', [Online] March 1998, pages 1 - 11, XP002927482 Retrieved from the Internet: <URL:http://infonet.aist-nara.ac.jp/member/ nori-d/mlr/id/draft-ietf-mpls-rvsp-00.txt> [retrieved on 2000-04-15]
- SWALLOW ET AL.: 'Extensions to RSVP for LSP Tunnels', [Online] November 1998, pages 1 - 47, XP002927483 Retrieved from the Internet: <URL:http://infonet.aist.nara.ac.jp/member/ nori-d/mlr/id/draft-ietf-mpls-rsvp-tunnel-0 0.txt> [retrieved on 2000-04-15]
- DAVIE ET AL.: 'Use of Label Switching With ATM', [Online] July 1998, pages 1 - 14, XP002927484 Retrieved from the Internet: <URL:http://ardnoc41.canet2.net/mpls/drafts /draft-davie-mpls-atm-01.txt> [retrieved on 2000-04-15]

## Description

The present invention relates to a data transmission system adapted to provide interworking between a Resource Reservation Protocol (RSVP) and Multi Protocol Label Swapping (MPLS) to provide a carrier scale end-to-end Quality of Service (QoS) architecture according to the preamble of claim 1, and a method for establishing end-to-end data transmission paths in such a data transmission system according to the preamble of claim 13.

A data transmission system and a method for establishing end-to-end data transmission paths in a data transmission system according to the preambles of claims 1 and 13 respectively are known from the article by Viswanathan et al., "Soft State Switching A Proposal to Extend RSVP for Switching RSVP Flows", August 1997, retrieved from the Internet: <URL: http://infonet.aist-nara.ac.ip/member/nori-d/mlr/id/draft-ietf-mpls-rsvp-OO.txt>, [XP002927481]. This article generally discloses the idea of establishing end-to-end data transmission paths over a backbone network, whereby the MPLS protocol is used top intercept RSVP messages and establish LSPs over said backbone network.

RSVP has been specified by the Internet Engineering Task Force (IETF). It specifies a mechanism for the allocation of resources in connectionless Internets. If RSVP is to work optimally, the underlying network must also provide, besides 'best effort', different service classes (for example, ATM). RSVP may be used over ATM as a means of offering secure service to application users. The RSVP, in this case, uses resources on a packet/application level which are later converted, or mapped, to guarantees on the ATM level. There exists within ATM, certain solutions which describe how the mapping of RSVP over ATM can be achieved. All of these solutions use the classic scheme for IP over ATM, (i.e. Hop-by-hop).

It is widely believed that the RSVP has scalability problems in wide area networks due to the memory consumption and processing power requirements. At the present time, RSVP is the only mechanism through which applications may transmit their QoS (Quality of Service) requirements.

MPLS (Multi Protocol Label Swapping) is intended to be used in backbone networks and scales better than RSVP. However, MPLS is not available to a terminal connections that is not end-to-end. Also, mechanisms are not available to convey a user's demands to MPLS.

In a data transmission system, in accordance with the present invention, end-users convey their QoS requirements via RSVP to MPLS which aggregates the relatively small individual RSVP flows into larger flows in one, or a number of, data flows. The advantages to be gained from this are that there is no need for a public network to remember small flows and that such networks have more details, or more exact information, concerning a user's QoS requirements. The effect is that

demands on transmission capacity and network resources, for example, processor and memory, are reduced. RSVP control packages are tunnelled via an MPLS network to make the network transparent to RSVP. Terminals use RSVP to transmit their demands on resources to the network. Access nodes have MPLS functionality which allows them to aggregate data flows. In addition, many small data flows are transported over only one connection if they have the same QoS characteristics.

According to a first aspect of the present invention, there is provided, a data transmission system including a backbone network, a plurality of routers, and a plurality of end user equipments, said system being adapted to establish end-to-ehd data transmission paths over the backbone network, said end user equipments being adapted to use RSVP messages to convey their specific requirements, and said system being is adapted to use MPLS to intercept said RSVP messages and establish Label Switched Paths (LSPs) over said backbone network, based on the content of said RSVP messages, which system is characterized by the features of the characterizing portion of claim 1.

The system may be adapted to provide end-to-end Quality of Service (QoS) through interworking between RSVP and MPLS.

The system may be adapted to aggregate a number of RSVP messages, having the same QoS semantics, into a single LSP.

The system may further include a plurality of end user networks, to which said end user equipments are adapted to be connected, and a plurality of routers adapted to connect said end user networks to said backbone network.

At least some of said end user networks may be Local Area Networks (LANs).

The backbone network may be an ATM network, adapted for the transmission of IP data packets and including a number of interconnected ATM switches, at least two of said routers may be edge routers for said ATM network, and the edge routers may be Label Switched Routers (LSRs), adapted to be connected to end user equipments for the establishment of unidirectional connections between end user equipments. An egress LSR may be adapted to select a reservation style for a RSVP session from a set of possible reservation styles, a RSVP session being identified by a unique tuple, and a RSVP session may be adapted to create one, or more, LSPs, depending on the selected reservation style. The set of reservation styles may include, inter alia, Fixed Filter (FF), Wildcard Filter (WF) and Shared Explicit (SE).

The LSPs may be set up by egress LSRs, and an Open Short Path First (OSPF) routing infrastructure of said system may be adapted to indicate said LSRs.

The egress LSRs may be provided by either Area Border Routers (ABRs), or Autonomous System Border Routers (ASBRs), or edge LSRs with attached subnets, and the LSRs may be adapted to advertise the different types of routes that define Forward Equivalence Class (FEC) elements. ABR nodes may be adapted to generate FECs that contain address prefixes for at least inter-area routes, or intra-area routes, and edge LSR nodes may be adapted to generate FECs for their attached subnets. The edge LSR nodes may be adapted to define one FEC for all of the address prefixes of their attached subnets.

The egress LSRs may be adapted to use Label Mapping (LM) to distribute FEC labels to upstream neighbours.

According to a second aspect of the present invention, there is provided, a method for establishing end-to-end data transmission paths in a data transmission system including a backbone network, a plurality of routers, and a plurality of end user equipments, said end user equipments using RSVP messages to convey their specific requirements and said system using MPLS to intercept said RSVP messages and establish Label Switched Paths (LSPs) over said backbone network, based on the content of said RSVP messages which method is characterized by the features of the characterizing portion of claim 13.

Thus the method is characterised by a first end user equipment requiring a connection to a second end user equipment issuing an RSVP-PATH message, indicating a required QoS, to an ingress LSR of said backbone network; via a first end user network with which said first end user equipment is associated; said ingress LSR encapsulating said RSVP-PATH message and sending it through said backbone network to an egress LSR of said backbone network; said egress LSR, on receipt of said RSVP-PATH message, decapsulating the message and issuing a PATH message towards a second end user network with which said second end user equipment is associated; said second end user equipment on acceptance of the connection to said first end user equipment sending an RESV message towards said first end user equipment; said egress LSR, upon receipt of the RESV message: buffering the RESV message, and establishing a Label Switched Path (LSP) to said ingress router, based on the parameters contained in the RESV message; said egress LSR, upon establishment of the LSP, encapsulating the buffered RESV message and sending it via the established LSP to said ingress LSR; said ingress LSR, on receipt of said RESV message, decapsulating the RESV message and sending it towards the first end user equipment thereby establishing a unidirectional connection from the first end user equipment to the second end user equipment.

The method may be characterised by said system providing end-to-end Quality of Service (QoS) through interworking between RSVP and MPLS.

The method may be characterised by said system aggregating a number of RSVP messages, having the same QoS semantics, into a single LSP.

The method may be characterised by said LSPs being established between ingress and egress LSRs of said backbone network, and by said end user equipments being connected to said LSRs via end user networks to which said end user equipments are connected.

The method may be characterised by an egress LSR of said backbone network selecting a reservation style for a RSVP session from a set of possible reservation styles, a RSVP session being identified by a unique tuple, and by said RSVP session creating one, or more, LSPs, depending on the selected reservation style.

The method may be characterised by said set of reservation styles including, inter alia, Fixed Filter (FF), Wildcard Filter (WF) and Shared Explicit (SE).

The method may be characterised by egress LSRs, setting up LSPs, and by an Open Short Path First (OSPF) routing infrastructure of said system indicating these nodes.

The method may be characterised by said egress LSRs being provided by either Area Border Routers (ABRs), or Autonomous System Border Routers (ASBRs), or edge LSRs with attached subnets, and by said LSRs advertising the different types of routes that define Forward Equivalence Class (FEC) elements.

The method may be characterised by said ABR nodes generating FECs that contain address prefixes for at least inter-area routes, or intra-area routes, and by said edge LSR nodes generating FECs for their attached subnets.

The method may be characterised by said edge LSR nodes defining one FEC for all of the address prefixes of their attached subnets.

The method may be characterised by said egress LSRs using Label Mapping (LM) to distribute FEC labels to upstream neighbours.

The method may be characterised by each LSR on a path towards an ingress LSR, on receipt of a LM message checking whether, or not, an advertiser according to routing is the next hop for a FEC; and either withdrawing a downstream label, in the event that it is not the next hop, by responding with a Label Withdraw (LW) message, or checking whether its router-id is in the LSR-path-vector, in the event that it is the next hop.

The method may be further characterised by each of said LSRs discarding the label mapping, in the event that said router-id is in said vector, and sending a NAK to the advertiser; or, in the event that said router-id is not in said vector, finding an upstream label for the FEC, cross-connecting it with the downstream label, and sending a Label Mapping (LM) message for the upstream label to all upstream neighbours, said LM message having the LSR's router-id added to the LSR-path-vector list, and the hop count set to a value of the received LM message plus 1.

The method may be characterised by said ingress LSRs, on receipt of LMs retaining only the labels used for forwarding; and investigating an LSR-path-vector list to check whether a loop has been established.

The method may be characterised by said ingress LSRs, on receipt of an IP data packet, modifying the TTL value based on the hop count value associated with a FEC; attaching a shim header to the IP data packet; and sending it on a Virtual Channel (VC) associated to the FEC. The method may be further characterised by said shim header having a label of value 0, indicating that forwarding of said IP data packet be based on a lPv4 header, and carrying a TTL value equal to a modified TTL of said IP header; and by a CoS (Class of Service) value being set to best effort. The method may be further characterised by said egress LSRs, on receipt of a labelled IP data packet, removing said shim header and delivering the IP data packet to an IP layer for further forwarding.

The method may be characterised by periodically refreshing said RSVP, PATH and RESV message

The foregoing and other features of the present invention will be better understood from the following description with reference to the accompanying drawings, in which:
Figure 1 diagrammatically illustrates the interworking between RSVP and MPLS, according to the present invention; and
Figure 2 diagrammatically illustrates egress based LSP initialisation used by a data transmission system of the present invention.

A glossary of the abbreviations used in this patent specification is set out below to facilitate an understanding of the present invention.
- ABR:: Area Border Router
- ASBR:: Autonomous System Border Router
- ATM:: Asynchronous Transfer Mode
- BGP4:: Border Gateway Protocol Version 4
- CoS:: Class of Service
- FEC:: Forwarding Equivalence Class
- FIB:: Forwarding Information Base
- FF:: Fixed Filter
- IETF:: Internet Engineering Task Force
- IP:: Internet Protocol
- IPv4:: Internet Protocol Version 4
- LDP:: Label Distribution Protocol
- LIB:: Label Information Base
- LM:: Label Mapping
- LR:: Label Request
- LSP:: Label Switched Path
- LSR:: Label Switched Router
- LW:: Label Withdraw
- NAK:: Negative Acknowledgement
- OSPF:: Open Short Path First
- QoS:: Quality of Service
- RSVP:: Resource Reservation Protocol
- SE:: Shared Explicit
- TE:: Terminal Equipment
- TTL:: Time To Live
- TLV:: Type Length Value
- UBR:: Unspecified Bit Rate (ATM)
- VC:: Virtual Circuit
- WF:: Wildcard Filter

It will be seen from the subsequent description that the present invention provides a system architecture and protocol enabling end users to convey their specific end-to-end QoS requirements by means of connecting RSVP islands through a MPLS cloud. End-users convey their requirements through use of RSVP messages. MPLS intercepts the RSVP messages and establishes Label Switched Paths (LSPs) over a backbone network (e.g. ATM network) based on the information indicated in the RSVP messages. MPLS also aggregates RSVP flows (depending on the reservation style) so that the number of flow states are substantially reduced. In the case of conveyed QoS requirements, this gives rise to an end-to-end OoS:d network that scales much better than an RSVP only network. Using MPLS alleviates the RSVP scalability problems, referred to above, since individual RSVP flows are aggregated in a backbone network, such as, an ATM network, and switched at layer 2 rather than being processed at layer 3 hop-by-hop. The major advantage of layer-2 switching is that it boosts performance as opposed to conventional routers. Furthermore, MPLS LSPs are established based on the true end-user requirements rather than an artificial classification procedure in the edge routers as it is proposed today.

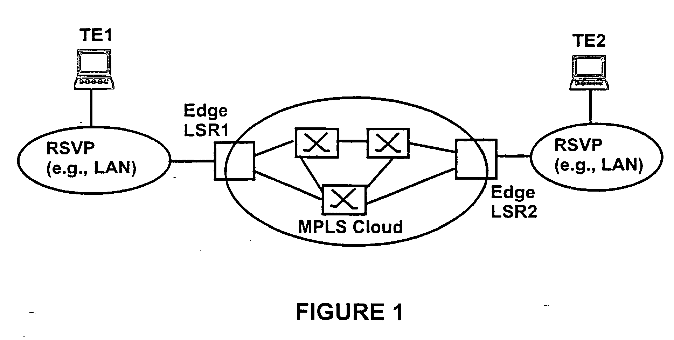

Figure 1 of the accompanying drawings diagrammatically illustrates the manner in which interworking is effected between RSVP and MPLS. As illustrated in Figure 1, end user Terminal Equipments, TE1 and TE2, are respectively connected to separate networks, for example, Local Area Networks (LANs), which form the RSVP islands, referred to above. In practice, a number of TEs would be connected to each of the LANs. The MPLS cloud may, for example, be provided by a backbone network including a number of interconnected switches (e.g. ATM switches) connected to Label Switched Routers, such as, LSR1 and LSR2, at the edge of the backbone network. The Terminal Equipments, TE1 and TE2 are, therefore, respectively connected to LSR1 and LSR2 via a LAN and thereby to the backbone network.

In MPLS, the establishment of a label switched path (LSP) is primarily based on the destination network prefix. However, there is also a possibility of classifying data packets based on the source address, or the destination address, or the port-id, or the transport protocol, etc., or any combination thereof (a.k.a flow). It is considered that a destination-network-prefix based classification is useful for aggregating best-effort flows while flow specific LSPs- are useful for time critical applications, or applications for which specific guarantees are requested. However, classifying data packets based on transport layer information may not be the best way of estimating user requirements. It is reasonable to assume that end users will use RSVP to convey their specific requirements. It is also reasonable to assume that MPLS will play an important role in the backbone. Thus, connecting RSVP islands through a MPLS cloud; as is illustrated in Figure 1 of the accompanying drawings, becomes a key-issue for enabling end-to-end guarantees.

The overall operation of the Resource Reservation Protocol (RSVP) will now be described, by way of example, with reference to Figure 1 of the accompanying drawings. Thus, operation of RSVP involves the following procedural steps:
1. The Terminal Equipment, TE I, issues an RSVP-PATH message indicating the QoS requirements via the LAN (RSVP island) to the ingress edge router, LSR1.
2. The ingress edge router, LSR1, encapsulates the RSVP-PATH message and sends it through the MPLS cloud, i.e. through the backbone network, to the egress edge router, LSR2.
3. The egress edge router, LSR2, decapsulates the RSVP-PATH message and issues the PATH message towards the LAN forming part of the receiving the RSVP isiand.
4. The Terminal Equipment, TE2, if it accepts the connection, sends an RESV message towards the Terminal Equipment, TE 1.
5. Upon receipt of the RESV message, the edge router, LSR2, buffers the RESV message and establishes a Label Switched Path (LSP) to the edge router, LSR1, based on the parameters contained in the RESV message; the procedures used to establish the LSPs will be outlined in the subsequent description.
6. On the establishment of a LSP, the edge router, LSR2, encapsulates the previously buffered RESV message and sends it via the established LSP to the edge router, LSR1
7. On receipt of the RESV message, the edge router, LSR1, decapsulates the RESV message and sends it towards the Terminal Equipment, TE1, via the associated LAN.

At the end of the foregoing procedure, a unidirectional connection will be established from the Terminal Equipment, TE1 to the Terminal Equipment, TE2.

If the Terminal Equipment, TE2, would like to set up a connection to the Terminal Equipment, TE1, the same procedure, as outlined above, would be executed but in the reverse direction, i.e. TE2 would issue the RSVP-PATH message, the edge router, LSR2 would be the ingress router and the edge router, LSR1, would be the egress router.

The manner in which aggregation of RSVP flows to Label Switched Paths (LSPs) is effected will now be described. Since LSRs constitute an aggregation point, several RSVP flows can be aggregated into the same LSP as long as they have the same QoS semantics. However, a receiver node can select from among a set of possible reservation styles for each session, and each RSVP session must have a particular style. In other words, senders have no influence on the choice of reservation style. The receiver can choose different reservation styles that get mapped to different LSPs.

An RSVP session is identified by a unique (destination address, protocol, destination port) tuple. Thus, an RSVP session can create one, or more, LSPs, depending on the reservation style which is chosen. Some reservation styles, such as Fixed Filter (FF), dedicate a particular reservation to an individual sender node. Other reservation styles, such as Wildcard Filter (WF) and Shared Explicit (SE), can share a reservation among several sender nodes.

The Fixed Filter (FF) style of reservation creates a distinct reservation for traffic from each sender that is not shared by other senders. This style is common for applications in which traffic from each sender is likely to be concurrent and independent. The total amount of reserved bandwidth on a link for sessions using FF style is the sum of the reservations for the individual senders. Because each sender has its own reservation, a unique label and a separate label switched path is assigned to each sender. This results in a point-to-point LSP between every sender-receiver pair.

With the Wildcard Filter (WF) style of reservation, a single shared reservation is used for all senders. The total reservation on a link remains the same regardless of the number of senders. This style is useful in applications in which not all senders send traffic at the same time. A single label-switched-path is created for all senders, because all senders to the session are covered by the reservation. On links that senders share, a single label is allocated. If there is only one sender, the LSP looks like a normal point-to-point connection. When multiple senders are present, a multipoint-to-point LSP is created. This has the advantage of minimizing the number of LSPs allowing better scaling of the network.

With the Shared Explicit (SE) style of reservation, any sender is allowed to share the reservation, the SE style allowing a receiver to explicitly specify the senders to be included. There is a single reservation on a link for all of the senders listed in the RSVP message. Only listed senders can join the reservation. Because each sender is explicitly listed in the RESV message, separate labels can be assigned to each sender, thereby creating separate LSPs for each sender. Unlike FF, all SE LSPs share a single reservation. Unlike WF, a separate LSP is created for each sender.

The procedures used to establish egress initiated Label Switched Paths (LSPs) will now be described. These procedures are based on a combination of an independent label distribution and a conservative label retention mode. In particular, Label Switched Paths (LSPs) are set-up by egress Label Switched Routers (LSRs), for example, Area Border Routers (ABRs), or Autonomous System Border Routers (ASBRs), or edge LSRs with attached subnets. The Open Short Path First (OSPF) routing infrastructure indicates these nodes. The different types of routes advertised by these nodes define the Forward Equivalents Class (FEC) elements of the FEC TLV and thus achieving stream aggregation. For example, an ABR defines a FEC containing address prefixes for summary (inter-area), intra-area, or other types of routes. ASBRs build a FEC for the external routes redistributed by BGP4. Edge LSRs generate FECs for their attached subnets (intra-area routes). One FEC can be defined for all the address prefixes of attached subnets.

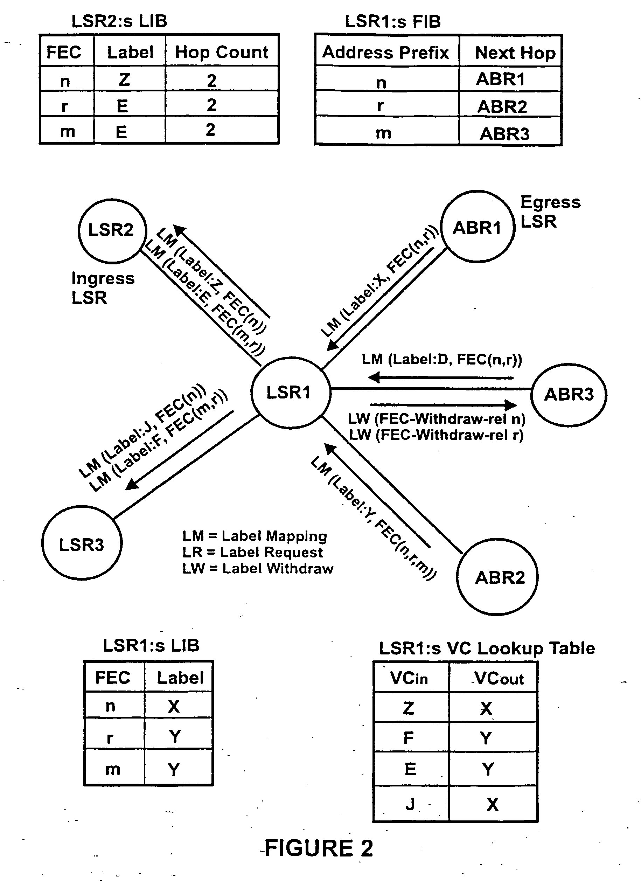

Each egress LSR distributes the labels for its FECs to all its upstream neighbours through LDP. Message Label Mapping (LM) is used for that purpose. Egress based LSP initialisation-is diagrammatically illustrated, by way of example, in Figure 2 of the accompanying drawings.

As illustrated in Figure 2, Area Border Router, ABR1, sends to its neighbour, Label Switched Router, LSR1, a Label Mapping (LM) for the address prefixes 'n' and 'r' defined in one FEC, i.e. Label: X, FEC (n,r). For the sake of loop detection, the router-id of the LSR is put in the LSR-path-vector TLV of the message. Finally, the Hop Count TLV of the message is set to 1. The Hop Count is used by the ingress LSR, LSR2 of Figure 2, to calculate the TTL (Time to Live) value of the IP data packet entering the MPLS backbone network (e.g. ATM network).

In practice, each core LSR on the path towards ingress LSRs will, upon receiving a Label Mapping message, follow the procedural steps set out below.
Step 1: Check if the advertiser according to routing is the next hop for the FEC. If it is not, the downstream label is withdrawn through responding with a Label Withdraw (LW) message - see the response of LSRI to ABR3 in Figure 2. If it is the next hop, proceed to Step 2.
Step 2. Check if its router-id is in the LSR-path-vector, i.e. a loop has been established. If yes, discards the label mapping and sends a NAK to the advertiser. Otherwise, proceed to Step 3.
Step 3. Find an upstream label for the FEC, cross-connect it with the downstream label, and send a Label Mapping (LM) message for the upstream label to all upstream neighbours. The LM message will have the LSR's router-id added to the LSR-path-vector list, and the Hop Count set to the value of the received LM message plus 1.

The establishment of upstream and downstream labelling is simplified if VC (Virtual Circuit) merging is supported by the LSRs. Otherwise, each LSR has to request a downstream label for each upstream label. This results in an overhead in LDP signalling and state information.

Ingress LSRs, upon receiving Label Mappings (LMs), retain only the labels used for forwarding. Ingress LSRs check whether a loop has been established by investigating the LSR-path-vector list. These labels and their FECs, as well as the Hop Count values, will populate the LIB and become the default paths for best effort traffic.

Upon receipt of an IP data packet, an ingress Label Switched Router, i.e. LSR2 of Figure 2:
- modifies the TTL value based on the Hop Count value associated with the FEC;
- attaches a shim header to the IP data packet; and
- sends it on the VC associated to the FEC.

The shim header carries the label of value 0 (lPv4 Explicit Null Label) indicating that the label stack must be popped at the egress LSR and the forwarding of the IP data packet should be based on the IPv4 header. It also carries a TTL value equal to the modified TTL of the IP header. The CoS (Class of Service) value is set to best effort.

When a labelled IP data packet is received by an egress LSR, the shim header is removed and the packet is delivered to the IP layer for further forwarding.

Upon routing changes, downstream labels for the affected FECs are released if they are not in use for other FEC elements. New labels are requested from the new next hop. Finally, new label mappings upstream may be required.

The tables shown in Figure 2 provide further information concerning the FECs, Labels, Hop Count, Address Prefixes, and Next Hop for Label Switched Routers, LSR1 and LSR2, together with VC lookup tables for LSR1.

The main advantage of the egress based solution is its economic use of VCs due to the mapping of a number of FECs onto one LSP, i.e. stream aggregation. It should, however, be noted that stream aggregation increases the traffic load on VCs, which may result in low performance if per VC queuing, due to fairness, is used for UBR. Another downside is protocol complexity. Loops might arise but the system is adapted to detect and break them by means of the LSR-vector-path.

In RSVP, PATH and RESV message are periodically refreshed. Supporting a large number of sessions may present scaling problems. Since memory and processing requirements increase linearly with an increase in the number of states, one way to alleviate the scaling problem is to increase the Refresh timer. However, this is done at the cost of increasing refresh timeout. It is, however, possible to increase the refresh timeout and still be able to react for faster detection of connectivity problems. For example, as soon as topology failures occur, every node adjacent to the failure notifies all affected nodes.

## Claims

1. A data transmission system including a backbone network, a plurality of routers, and a plurality of end user equipments, said system being adapted to establish end-to-end data transmission paths over the backbone network, said end user equipments are adapted to use RSVP (Resource Reservation Protocol ) messages to convey their specific requirements and in that said system is adapted to use MPLS (Multi Protocol Label Swapping) to intercept said RSVP messages and establish Label Switched Paths (LSPs) over said backbone network, based on the content of said RSVP messages, **characterised in that**
- a first end user equipment (TE1) requiring a connection to a second end user equipment (TE2) is arranged to sue an RSVP-PATH message, indicating a required QoS, to an ingress LSR (Label Switched Routers) of said backbone network; via a first end user network with which said first end user equipment (TE1) is associated;
- said ingress LSR is arranged to encapsulate said RSVP-PATH message and to send it through said backbone network to an egress LSR of said backbone network;
- said egress LSR, on receipt of said RSVP-PATH message, is arranged to decapsulate the message and issuing a PATH message towards a second end user network with which said second end user equipment (TE2) is associated;
- said second end user equipment (TE2) on acceptance of the connection to said first end user equipment (TE1) is arranged to send an RESV message towards said first end user equipment (TE 1);
- said egress LSR, upon receipt of the RESV message, is arranged to:
- buffer the RESV message; and
- establish a Label Switcfied Path (LSP) to said ingress router, based on the parameters contained in the RESV message;
- said egress LSR, upon establishment of the LSP, is arranged to encapsulate the buffered RESV message and send it via the established LSP to said ingress LSR;
- said ingress LSR, on receipt of said RESV message is arranged to decapsulate the RESV message and send it towards the first end user equipment (TE1), thereby establish a unidirectional connection from the first end user equipment (TE1) to the second end user equipment (TE2).

2. A data transmission system, as claimed in claim 1, **characterised in that** said system is adapted to provide end-to-end Quality of Service (QoS) through interworking between RSVP and MPLS.

3. A data transmission system, as claimed in claim 2, **characterised in that** said system is adapted to aggregate a number of RSVP messages, having the same QoS semantics, into a single LSP.

4. A data transmission system, as claimed in claim 3, **characterised in that** at least some of said end user networks are Local Area Networks (LANs).

5. A data transmission system, as claimed in claim 3, or claim 4, **characterised in that** said backbone network is an ATM network, adapted for the transmission of IP data packets and including a number of interconnected ATM switches, **in that** at least two of said routers are edge routers for said ATM network, and **in that** said edge routers are Label Switched Routers (LSRs), adapted to be connected to end user equipments for the establishment of unidirectional connections between end user equipments.

6. A data transmission system, as claimed in claim 5, **characterised in that** an egress LSR is adapted to select a reservation style for a RSVP session from a set of possible reservation styles, a RSVP session being identified by a unique tuple, and **in that** a RSVP session is adapted to create one, or more, LSPs, depending on the selected reservation style.

7. A data transmission system, as claimed in claim 6, **characterised in that** said set of reservation styles includes, inter alia, Fixed Filter (FF), Wildcard Filter (WF) and Shared Explicit (SE).

8. A data transmission system, as claimed in either claim 6, or claim 7, **characterised in that** LSPs are set up by egress LSRs, and **in that** an Open Short Path First (OSPF) routing infrastructure of said system is adapted to indicate said LSRs.

9. A data transmission system, as claimed in claim 8, **characterised in that** said egress LSRs are provided by either Area Border Routers (ABRs), or Autonomous System Border Routers (ASBRs), or edge LSRs with attached subnets, and **in that** said LSRs are adapted to advertise the different types of routes that define Forward Equivalence Class (FEC) elements.

10. A data transmission system, as claimed in claim 9, **characterised in that** ABR nodes are adapted to generate FECs that contain address prefixes for at least inter-area routes, or intra-area routes, and **in that** edge LSR nodes are adapted to generate FECs for their attached subnets.

11. A data transmission system, as claimed in claim 10, **characterised in that** said edge LSR nodes are adapted to define one FEC for all of the address prefixes of their attached subnets.

12. A data transmission system, as claimed in any of claims 6 to 11, **characterised in that** said egress LSRs are adapted to use Label Mapping (LM) to distribute FEC labels to upstream neighbours.

13. A method for establishing end-to-end data transmission paths in a-data transmission system including a backbone network, a plurality of routers and a plurality of end user-equipments, said end user equipments using RSVP (Resource Reservation Protocol) messages to convey their specific requirements and by said system using MPLS (Multi Protocol Label Swapping) to intercept said RSVP messages and establish Label Switched Paths (LSPs) over said backbone network, based on the content of said RSVP messages, **characterised in . that**
- a first end user equipment (TE1) requiring a connection to a second end user equipment (TE2) issuing an RSVP-PATH message, indicating a required QoS, to an ingress LSR (Label Switched Router) of said backbone network; via a first end user network with which said first end user equipment (TE1) is associated;
- said ingress LSR encapsulating said RSVP-PATH message and sending it through said backbone network to an egress LSR of said backbone network;
- said egress LSR, on receipt of said RSVP-PATH message, decapsulating the message and issuing a PATH message towards a second end user network with which said second end user equipment (TE2) is associated;
- said second end user equipment (TE2) on acceptance of the connection said first end user equipment (TE1) sending an RESV message towards said first end user equipment (TE 1);
- said egress LSR, upon receipt of the RESV message:
- buffering the RESV message; and
- establishing a Label Switched Path (LSP) to said ingress router, based on the parameters contained in the RESV message;
- said egress LSR, upon establishment of the LSP, encapsulating the buffered RESV message and sending it via the established LSP to said ingress LSR;
- said ingress LSR, on receipt of said RESV message, decapsulating the RESV message and sending it towards the first end user equipment (TE1), thereby establishing a unidirectional connection from the first end user equipment (TE1) to the second end user equipment (TE2).

14. A method, as claimed in claim 13, **characterised by** said system providing end-to-end Quality of Service (QoS) through interworking between RSVP and MPLS.

15. A method, as claimed in claim 14, **characterised by** said system aggregating a number of RSVP messages, having the same QoS semantics, into a single LSP.

16. A method, as claimed in either claim 14, or claim 15, **characterised by** an egress LSR of said backbone network selecting a reservation style for a RSVP session from a set of possible reservation styles, a RSVP session being identified by a unique tuple, and by said RSVP session creating one, or more, LSPs, depending on the selected reservation style.

17. A method, as claimed in claim 16, **characterised by** said set of reservation styles including, inter alia, Fixed Filter (FF), Wildcard Filter (WF) and Shared Explicit (SE).

18. A method, as claimed in any of claims 14 to 17, **characterised by** egress LSRs, setting up LSPs, and by an Open Short Path First (OSPF) routing infrastructure of said system indicating these nodes.

19. A method, as claimed in claim 18, **characterised by** said egress LSRs being provided by either Area Border Routers (ABRs), or Autonomous System Border Routers (ASBRs), or edge LSRs with attached subnets, and by said LSRs advertising the different types of routes that define Forward Equivalence Class (FEC) elements.

20. A method, as claimed in claim 19, **characterised by** said ABR nodes generating FECs that contain address prefixes for at least inter-area routes, or intra-area routes, and by said edge LSR nodes generating FECs for their attached subnets.

21. A method, as claimed in claim 20, **characterised by** said edge LSR nodes defining one FEC for all of the address prefixes of their attached subnets.

22. A method, as claimed in any of claims 14 to 21, **characterised by** said egress LSRs using Label Mapping (LM) to distribute FEC labels to upstream neighbours.

23. A method, as claimed in claim 22, **characterised by** each LSR on a path towards an ingress LSR, on receipt of a LM message:
- checking whether, or not, an advertiser according to routing is the next hop for a FEC; and either:
- withdrawing a downstream label, in the event that it is not the next hop, by responding with a Label Withdraw (LW) message; or
- checking whether its router-id is in the LSR-path-vector, in the event that it is the next hop.

24. A method, as claimed in claim 23, **characterised by** each of said LSRs:
- discarding the label mapping, in the event that said router-id is in said vector, and sending a NAK to the advertiser; or
- in the event that said router-id is not in said vector:
- finding an upstream label for the FEC;
- cross-connecting it with the downstream label; and
- sending a Label Mapping (LM) message for the upstream label to all upstream neighbours, said LM message having the LSR's router-id added to the LSR-path-vector list, and the hop count set to a value of the received LM message plus 1.

25. A method, as claimed in either claim 23 or claim 24, **characterised by** said ingress LSRs, on receipt of LMs:
- retaining only the labels used for forwarding; and
- investigating an LSR-path-vector list to check-whether a loop has been established.

26. A method, as claimed in any of claims 23 to 25, **characterised by** said ingress LSRs, on receipt of an IP data packet:
- modifying the TTL value based on the hop count value associated with a FEC;
- attaching a shim header to the IP data packet; and
- sending it on a Virtual Channel (VC) associated to the FEC.

27. A method, as claimed in claim 26, **characterised by** said shim header:
- having a label of value 0, indicating that forwarding of said IP data packet be based on a lPv4 header:
- carrying a TTL value equal to a modified TTL of said IP header;
and by a CoS (Class of Service) value being set to best effort.

28. A method, as claimed in either claim 26, or claim 27, **characterised by** said egress LSRs, on receipt of a labelled IP data packet, removing said shim header and delivering the IP data packet to an IP layer for further forwarding.

29. A method, as claimed in any of claims 14 to 28, **characterised by** periodically refreshing said RSVP, PATH and RESV message

## Revendications

1. Système de transmission de données comportant un réseau dorsal, une pluralité de routeurs et une pluralité d'équipements d'utilisateur final, ledit système étant adapté pour établir des chemins de transmission de données de bout en bout dans le réseau dorsal, lesdits équipements d'utilisateur final sont adaptés peut utiliser des messages de protocole de réservation de ressources (RSVP) afin de transporter leurs exigences spécifiques et dans lequel ledit système est adapté pour utiliser la commutation d'étiquettes entre protocoles multiples (MPLS) pour intercepter lesdits messages RSVP et établir des chemins commutés par étiquettes (LSP) dans ledit réseau dorsal, sur la base du contenu desdits messages RSVP,
**caractérisé en ce que**
- un premier équipement d'utilisateur final (TE1) demandant une connexion à un deuxième équipement d'utilisateur final (TE2) est arrangé pour délivrer un message RSVP-PATH, indiquant une qualité de service (QoS) demandée, à un routeur commutateur d'étiquettes (LSR) d'entrée du réseau dorsal ; par le biais d'un premier réseau d'utilisateur final auquel est associé ledit premier équipement d'utilisateur final (TE1) ;
- ledit routeur LSR d'entrée est arrangé pour encapsuler ledit message RSVP-PATH et pour l'envoyer à travers ledit réseau dorsal à un routeur LSR de sortie dudit réseau dorsal ;
- ledit routeur LSR de sortie, à la réception dudit message RSVP-PATH, est arrangé pour décapsuler le message et délivrer un message PATH vers un deuxième réseau d'utilisateur final auquel est associé ledit deuxième équipement d'utilisateur final (TE2) ;
- ledit deuxième équipement d'utilisateur final (TE2) à l'acceptation de la connexion au dit premier équipement d'utilisateur final (TE1) est arrangé pour envoyer un message RESV vers ledit premier équipement d'utilisateur final (TE1) ;
- ledit routeur LSR de sortie, à la réception du message RESV, est arrangé pour :
- stocker le message RESV ; et
- établir un chemin commuté par étiquette (LSP) au dit routeur d'entrée, sur la base des paramètres contenus dans le message RESV ;
- ledit routeur LSR de sortie à l'établissement du chemin LSP, est arrangé pour encapsuler le message RESV stocké et l'envoyer par le chemin LSP établi au dit routeur LSR d'entrée ;
- ledit routeur LSR d'entrée, à la réception dudit message RESV, est arrangé pour décapsuler le message RESV et l'envoyer vers le premier équipement d'utilisateur final (TE1), établissant de cette façon une connexion unidirectionnelle du premier équipement d'utilisateur final (TE1) au deuxième équipement d'utilisateur final (TE2).

2. Système de transmission de données, selon la revendication 1, **caractérisé en ce que** ledit système est adapté pour fournir une qualité de service (QoS) de bout en bout par, un interfonctionnement entre les mécanismes RSVP et MPLS.

3. Système de transmission de données, selon la revendication 2, **caractérisé en ce que** ledit système est adapté pour agréger un certain nombre de messages RSVP, ayant la même sémantique de QoS, en un seul chemin LSP.

4. Système de transmission de données, selon la. revendication 3, **caractérisé en ce qu'**au moins quelques uns desdits réseaux d'utilisateur final sont des réseaux locaux (LAN).

5. Système de transmission de données, selon la revendication 3 ou la revendication 4, **caractérisé en ce que** ledit réseau dorsal est un réseau ATM, adapté pour la transmission de paquets de données IP et comprenant un certain nombre de commutateurs ATM interconnectés, **en ce qu'**au moins deux desdits routeurs sont des routeurs de périphérie pour ledit réseau ATM, et **en ce que** lesdits routeurs de périphérie sont des routeurs commutateurs d'étiquettes (LSR), adaptés pour être connectés aux équipements d'utilisateur final afin d'établir des connexions unidirectionnelles entre des équipements d'utilisateur final.

6. Système de transmission de données, selon la revendication 5, **caractérisé en ce qu'**un routeur LSR de sortie est adapté pour sélectionner un style de réservation pour une session RSVP à partir d'un ensemble de styles de réservation possibles, une session RSVP étant identifiée par un nuplet unique, et **en ce qu'**une session RSVP est adaptée pour créer un ou plusieurs chemins LSP, en fonction du style de réservation sélectionné.

7. Système de transmission de données, salon la revendication 6, **caractérisé en ce que** ledit ensemble de styles de réservation comprend, entre autres choses, des filtres fixes (FF), des filtres génériques (WF) et des filtres explicitement partagés (SE).

8. Système de transmission de données, selon la revendication 6 ou la revendication 7, **caractérisé en ce que** des chemins LSP sont établis par des routeurs LSR de sortie, et **en ce qu'**une infrastructure de routage de premier plus court chemin ouvert (OSPF) dudit système est adaptée pour indiquer lesdits chemins LSR.

9. Système de transmission de données, selon la revendication 8, **caractérisé en ce que** lesdits routeurs LSR de sortie sont fournis soit par des routeurs de frontière de zone (ABR), soit par des routeurs de frontière de système autonome (ASBR), soit par des routeurs LSR de périphérie avec des sous-réseaux joints, et **en ce que** lesdits routeurs LSR sont adaptés pour indiquer les différents types de routes qui définissent des éléments de classe d'acheminement (FEC) .

10. Système de transmission de données, selon la revendication 9, **caractérisé en ce que** les noeuds de routeurs ABR sont adaptés pour générer des classes FEC qui contiennent des préfixes d'adresse pour au moins des routes inter-zones ou des routes intra-zones, et **en ce que** les noeuds de routeurs LSR de périphérie sont adaptés pour générer des classes FEC pour leurs sous-réseaux joints.

11. Système de transmission de données, selon la revendication 10, **caractérisé en ce que** lesdits noeuds de routeurs LSR de périphérie sont adaptés pour définir une classe FEC pour tous les préfixes d'adresse de leurs sous-réseaux joints.

12. Système de transmission de données, selon l'une quelconque des revendications 6 à 11, **caractérisé en ce que** lesdits routeurs LSR de sortie sont adaptés pour utiliser un mappage d'étiquettes (LM) pour distribuer des étiquettes de classe FEC aux routeurs voisins dans le flux montant.

13. Procédé pour établir des chemins de transmission de données de bout en bout dans un système de transmission de données comprenant un réseau dorsal, une pluralité de routeurs et une pluralité d'équipements d'utilisateur final, lesdits équipements d'utilisateur final utilisant des messages de protocole de réservation de ressources (RSVP) pour transporter leurs exigences spécifiques et par ledit système utilisant la commutation d'étiquettes entre protocoles multiples (MPLS) pour intercepter lesdits messages RSVP et établir des chemins commutés par étiquette (LSP) dans ledit réseau dorsal, sur la base du contenu desdits messages RSVP, **caractérisé en ce que**
- un premier équipement d'utilisateur final (TE1) demandant une connexion à un deuxième équipement d'utilisateur final (TE2) délivre un message RSVP-PATH, indiquant une qualité de service demandée, à un routeur commutateur d'étiquettes (LSR) d'entrée dudit réseau dorsal ; par le biais d'un premier réseau d'utilisateur final auquel est associé ledit premier équipement d'utilisateur final (TE1) ;
- ledit routeur LSR d'entrée encapsule ledit message RSVP-PATH et l'envoie à travers ledit réseau dorsal à un routeur LSR de sortie dudit réseau dorsal ;
- ledit routeur LSR de sortie, à la réception dudit message RSVP-PATH, décapsule le message et délivre un message PATH vers un deuxième réseau d'utilisateur final auquel est associé ledit deuxième équipement, d'utilisateur final (TE2) ;
- ledit deuxième équipement d'utilisateur final (TE2) à l'acceptation de la connexion au dit premier équipement d'utilisateur final (TE1) envoie un message RESV vers ledit premier équipement d'utilisateur final (TE1) ;
- ledit routeur LSR de sortie, à la réception du message RESV :
- stocke le message RESV ; et
- établit un chemin commuté par étiquette (LSP) au dit routeur d'entrée, sur la base des paramètres contenus dans le message RESV ;
- ledit routeur LSR de sortie, à l'établissement du chemin LSP, encapsule le message RESV stocké et l'envoie par le chemin LSP établi au dit routeur LSR d'entrée ;
- ledit routeur LSR d'entrée, à la réception dudit message RESV, décapsule le message RESV et l'envoie vers le premier équipement d'utilisateur final (TE1), établissant de cette façon une connexion unidirectionnelle du premier équipement d'utilisateur final (TE1) au deuxième équipement d'utilisateur final (TE2).

14. Procédé, selon la revendication 13, **caractérisé par le fait que** ledit système fournit une qualité de service (QoS) de bout en bout par un interfonctionnement entre les mécanismes RSVP et MPLS.

15. Procédé, selon la revendication 14, **caractérisé par le fait que** ledit système agrège un certain nombre de messages RSVP, ayant la même sémantique de QoS, en un seul chemin LSP.

16. Procédé, selon la revendication 14 ou la revendication 15, **caractérisé par le fait qu'**un routeur LSR de sortie dudit réseau dorsal sélectionne un style de réservation pour une session RSVP à partir d' un ensemble de styles de réservation possibles, une session RSVP étant identifiée par un nuplet unique, et **par le fait que** ladite session RSVP crée un ou plusieurs chemins LSP, en fonction du style de réservation sélectionne.

17. Procédé, selon la revendication 16, **caractérisé par le fait que** ledit ensemble de styles de réservation comprend, entre autres choses, des filtres fixes (FF), des filtres génériques (WF) et des filtres explicitement partagés (SE).

18. Procédé, selon l'une quelconque des revendications 14 à 17, **caractérisé par le fait que** des routeurs LSR de sortie établissent des chemins LSP et **par le fait qu'**une infrastructure de routage de premier plus court chemin ouvert (OSPF) dudit système indique ces noeuds.

19. Procédé, selon la revendication 18, **caractérisé par le fait que** lesdits routeurs LSR de sortie sont fournis soit par des routeurs de frontière de zone (ABR), soit par des routeurs de frontière de système autonome (ASBR), soit par des routeurs LSR de périphérie avec des sous-réseaux joints, et **par le fait que** lesdits routeurs LSR indiquent les différents types de routes qui définissent des éléments de classe d'acheminement (FEC).

20. Procédé, selon la revendication 19, **caractérisé par le fait que** lesdits noeuds de routeurs ABR génèrent des classes FEC qui contiennent des préfixes d'adresse pour au moins des routes inter-zones ou des routes intra-zones, et **par le fait que** lesdits noeuds de routeurs LSR de périphérie génèrent des classes FEC pour leurs sous-réseaux joints.

21. Procédé, selon la revendication 20, **caractérisé par le fait que** lesdits noeuds de routeurs LSR de périphérie définissent une classe FEC pour tous les préfixes d'adresse de leurs sous-réseaux joints.

22. Procédé, selon l'une quelconque des revendications 14 à 21, **caractérisé par le fait que** lesdits routeurs LSR de sortie utilisent un mappage d'étiqueté (LM) pour distribuer des étiquettes de classe FEC aux routeurs voisins dans le flux montant.

23. Procédé, selon la revendication 22, **caractérisé par le fait que** chaque routeur LSR sur un chemin vers un routeur LSR d'entrée, à la réception d'un message ML (message de mappage d'étiquette) :
- vérifie si un indicateur selon le routage est ou non le prochain bond pour une classe FEC; et soit
- retire une étiquette de flux descendant, dans le cas où il ne s'agit pas du prochain bond, en répondant par un message de retrait d'étiquette (LW), soit
- vérifie si son identificateur de routeur est dans le vecteur de chemin du routeur LSR, dans le cas où il s'agit du prochain bond.

24. Procédé, selon la revendication 23, **caractérisé par le fait que** chacun desdits routeurs LSR :
- rejette le mappage d'étiquette, dans le cas où ledit identificateur de routeur est dans ledit vecteur, et envoie un acquittement négatif à l'indicateur ; ou
- dans le cas où ledit identificateur de routeur n'est pas dans ledit vecteur :
- trouve une étiquette de flux montant pour la classe FEC ;
- l'interconnecte à l'étiquette de flux descendant ; et
- envoie un message LM pour l'étiquette de flux montant à tous les routeurs voisins dans le flux montant, ledit message LM ayant l'identificateur du routeur LSR ajouté à la liste des vecteurs de chemin de routeur LSR et le compte de bonds défini à une valeur du message LM reçu plus 1.

25. Procédé, selon la revendication 23 ou la revendication 24, **caractérisé par le fait que** lesdits routeurs LSR d' entrée, à la réception des messages LM :
- ne retiennent que les étiquettes utilisées pour l'acheminement vers l' avant ; et
- examinent la liste des vecteurs de chemins de routeur LSR pour vérifier si une boucle a été établie.

26. Procédé, selon l'une quelconque des revendications 23 à 25, **caractérisé par le fait que** lesdits routeurs LSR d'entrée, à la réception d'un paquet de données IP :
- modifient la valeur TTL (durée de vie) basée sur la valeur du compte de bonds associée à une classe FEC ;
- joignent un en-tête de compensation au paquet de données IP ; et
- l'envoient sur un canal virtuel (VC) associé à la classe FEC.

27. Procédé, selon la revendication 26, **caractérisé par le fait que** ledit en-tête de compensation :
- a une étiquette da valeur 0, indiquant que l'acheminement vers l'avant dudit paquet de données IP est basé sur un en-tête IPv4 ;
- porte une valeur TTL égale à la durée TTL modifiée dudit en-tête IP ;
et **par le fait qu'**une valeur de classe de service (CoS) est définie à la valeur de service minimal.

28. Procédé, selon la revendication 26 ou la revendication 27, **caractérisé par le fait que** lesdits routeurs LSR de sortie, à la réception d'un paquet de données IP étiqueté, suppriment ledit en-tête de compensation et fournissent le paquet de données IP à une couche IP en vue de poursuivre son acheminement.

29. Procédé, selon l'une quelconque des revendications 14 à 28, **caractérisé par** un rafraîchissement périodique desdits messages RSVP, PATH et RESV

## Patentansprüche

1. Datenübertragungssystem mit einem Hauptnetz, einer Anzahl von Routern und einer Anzahl von Endnutzerausrüstungen, wobei das System so ausgebildet ist, dass es End-zu-End-Datenübenrtragungswege über ein Hauptnetz richten kann, wobei die Endnutzerausrüstungen so ausgebildet sind, dass sie RSVP-(Resource Reservation Protocol)-Mitteilungen benutzen können, um ihre spezifischen Anforderungen zu übertragen, und dass das System so ausgebildet ist, dass es MPLS (Multi Protocol Label Swapping) verwenden kann, um die RSVP-Mitteilungen abzufangen und über das Hauptnetz kennungsgeschaltete Leitungswege (Labe Switched Paths - LSPs) basierend auf dem Inhalt der RSVP-Mitteillungen zu errichten, **dadurch gekennzeichnet, dass**
- eine erste Endnutzerausrustung (TE1), die eine Verbindung mit einer zweiten Endnutzerausrüstung (TE2) anfordert, so angeordnet ist, dass sie über ein erstes Endnutzernetz, dem die erste Endnutzerausrüstung (TE1) zugeordnet ist, um eine RSVP-PATH-Mitteilung nachsucht, die einem Eingangs-LSR (Label Switched Router) des Hauptnetzes einen erforderlichen QoS anzeigt;
- der Eingangs-LSR dazu dient, die PSVP-PATH-Mitteilung zu verkapseln und diese durch das Hauptnetz zu einem Ausgangs-LSR des Hauptnetzes zu schicken;
- der Ausgangs-LSR bei Empfang der RSVP-PATH-Mitteilung dazu dient, die Mitteilung zu entkapseln und eine PATH-Mitteilung auf ein zweites Endnutzernetzwerk ausgibt, dem die zweite Endnutzerausrüstung (TE2) zugeordnet ist;
- die zweite Endnutzerausrüstung (TE2) bei Annehmen der Verbindung mit der ersten Endnutzerausrüstung (TE1) dazu dient, eine RESV-Mitteilung zur ersten Endnutzerausrüstung (TE1) zu schicken;
- der Ausgangs-LSR bei Empfang der RESV-Mitteilung dazu dient:
- die RESV-Mitteilung zu puffen; und
- einen kennungsgeschaltelen leitungsweg (LSP) zum Eingangsrouter zu richten, basierend auf den Parametern, die in der RESV-Mitteilung enthalten sind;
- wobei der Ausgangs-LSR bei Errichten des LSP dazu dient, die gepufferte RESV-Mitteilung zu verkapseln und sie über den errichteten LSP zum Eingangs-LSR zu schicken;
- der Eingangs-LSR bei Empfang der RESV-Mitteilung dazu dient, die RESV. Mitteilung zu entkapseln und sie zu der ersten Endnutzerausrüstung (TE1) zu schicken, wodurch eine unidirektionale Verbindung von der ersten Endnutzerausrüstung (TE1) zur zweiten Endnutzerausrüstung (TE2) errichtet wird.

2. Datenübertragungssystem nach Anspruch 1, **dadurch gekennzeichnet, dass** das System so ausgebildet ist, dass es durch Zusammenarbeit zwischen RESV und MPLS einen End-zu-End-Servicequalität (QoS) erzeugt.

3. Datenübertragungssystem nach Anspruch 2, **dadurch gekennzeichnet, dass** das System eine Anzahl von RSVP-Mitteilungen, die die gleiche QoS-Semantik haben, zu einem einzigen LSP sammeln kann.

4. Datenübertragungssystem nach Anspruch 3, **dadurch gekennzeichnet, dass** wenigstens einige der Endnutzernetze lokale Bereichsnetze (LANs) sind.

5. Datenübenragungssystem nach Anspruch 3 oder 4, **dadurch gekennzeichnet, dass** das Hauptnetz ein ATM-Netz ist, das für die Übertragung von IP-Datenpaketen geeignet ist und eine Anzahl von miteinander verbundenen ATM-Schaltern aufweist, wobei wenigstens zwei der Router Randrouter für das ATM-Netz sind, und dass die Randrouter kennungsgeschaltete Router (LSRs) sind, die so ausgebildet sind, dass sie mit den Endnutzerausrüstungen zum Errichten von unidirektionalen Verbindungen zwischen Endnutzerausrüstungen verbunden werden können.

6. Datenübertrasungssystem nach Anspruch 5**, dadurch gekennzeichnet, dass** ein Ausgangs-LSR so ausgebildet ist, dass er aus einem Satz möglicher Zuteilungsentwürfe einen Zuteilungsentwurf für eine RSVP-Sitzung auswählen kann, wobei eine RSVP-Sitzung durch einen eindeutigen Tupel identifiziert wird und dass eine PSVP-Sitzung so ausgebildet ist, dass sie einen oder mehrere LSPs in Abhängigkeit von dem gewählten Zuteilungsentwurf erzeugen kann.

7. Datenübertragungssystem nach Anspruch 6, **dadurch gekennzeichnet, dass** der Satz Zutellungsentwürfe unter anderem stationäres Filter (Fixed Filter - FF), Joker-Filler (Wildcard Filter - WF) und Gemeinsame Adresse (Shared Explicit - SE) aufweist.

8. Datenübertragungssystem nach einem der Ansprüche 6 oder 7, **dadurch gekennzeichnet, dass** die Ausgangs-LSRs errichtet werden und dass eine Open-Short-Path-First-(OSPF)-Routing-Infrastruktur des Systems dazu dient, die LSRs anzuzeigen.

9. Datenübertragungssystem nach Anspruch 8, **dadurch gekennzeichnet, dass** die Ausgangs-LSRs entweder durch Grenzbereichs-Router (Arca Border Routers - ABRs) oder Router mit autonomen Systemgrenzen (Autonomous System Border Routers - ASBRs) oder Rand-LSRs mit anhängenden Unternetzen gebildet sind und dass die LSRs so ausgebildet sind, dass sie die unterschiedlichen Typen von Routern, welche die Forward Equivalence Class (FEC)-Elemente definieren, ankündigen.

10. Datenübertragungssystem nach Anspruch 9, **dadurch gekennzeichnet, dass** ABR-Knoten so ausgebildet sind, dass sie FECs erzeugen, die Adressen enthalten, welche für wenigstens die Zwischenbereichsleitungswege oder die Binnenbereichsleitungswege vorab festgelegten sind, und dass die Rand-LSR-Knoten so ausgebildet sind, dass sie für ihre anhängenden Subnetze FECs erzeugen können.

11. Datenübertragungssystem nach Anspruch 10, **dadurch gekennzeichnet, dass** die Rand-LSR-Knoten so ausgebildet sind, dass sie eine FEC für alle Adressen, die für ihre anhängenden Subneize vorab festgelegt sind, definieren.

12. Datenübertragungssystem nach einem der Ansprüche 6 bis 11, **dadurch gekennzeichnet dass** die Ausgangs-LSRs so ausgebildet sind, dass sie Kennungsaufgliederung (Label Mapping - LM) verwenden können, um die FEC-Kennungen an vorgeschaltete Nachbarn zu verteilen.

13. Verfahren zum Errichten von End-zu-End-Datenübertragungsleitungswegen in einem Datenübertragungssystem, das ein Hauptnetz, eine Anzahl von Routern und eine Anzahl von Endnutzerausrüstungen umfasst, wobei die Endnutzerausrüstungen RSVP - Resource Reservation Protocol)-Mitteilungen verwenden, um ihre spezifischen Anforderungen zu Übertragen, und durch das System MPLS (Multi Protocol Label Swapping) benutzen, um ihre RSVP-Mitteilungen abzufangen und um kennungsgeichaltcte Leituagswege (LSPs) über das Hauptnetz, basierend auf dcm Inhalt der RSVP-Mitteilungen zu errichten,
**dadurch gekennzeichnet, dass**
- eine erste Endnutzerausrüstung (TE1), die eine Verbindung zu einer zweiten Endnutzerausrüstung (TE2) anfordert, über ein erstes Endnutzernetz, dem die erste Endnutzerausrüstung (TE1) zugeordnet ist, eine PSVP-PATH-Mitteilung, die einen erforderlichen QoS anzeigt, an einen Eingangs-LSR (Label Switched Router) des Hauptnetzes ausgibt;
- der Eingangs-LSR die RSVP-PATH-Mitteilung verkapselt und sie durch das Hauptnetz an einen Ausgangs-LSR des Hauptnetzes schickt;
- der Ausgangs-LSR bei Empfang der RSVP-PATH-Mitteilung die Mitteilung entkapselt und eine PATH-Mitteilung auf ein zweites Endnutzernetz, dem die zweite Endnutzerausrüstung (TE2) zugeordnet ist, ausgibt;
- die zweite Endnutzerausrüstung (TE2) bei Annehmen der Verbindung mit der ersten Endnutzerausrüstung (TE1) zur ersten Endnutzerausrüstung (TE1) eine RESV-Mitteilung sendet;
- der Ausgangs-LSR bei Empfang der RESV-Mitteilung:
- die RSV-Mitteilung puffert; und
- einen kennungsgeschalteten Leitungsweg (LSP) zu dem Eingangsrouter basierend auf den Parametern, die in der RESV-Mitteilung enthalten sind, errichtet;
- der Ausgangs-LSR bei Errichtung des LSP die gepufferte RESV-Mitteilung verkapselt und sie über den errichteten LSP an den Eingangs-LSR schickt;
- der Eingangs-LSR bei Empfang der RESV-Mitteilung die RESV-Mitteilung entkapselt und sie zu der ersten Endnutzerausrüstung (TE1) schickt, wodurch eine unidirektionale Verbindung von der ersten Endnutzerausrüstung (TE1) zu der zweiten Endnutzerausrüstung (TE2) errichtet wird,

14. Verfahren nach Anspruch 13, **gekennzeichnet durch** das System, das **durch** das Zusammenarbeiten zwischen RSVP und MPLS einen End-zu-End-Qualitätsservice (QoS) erzeugt.

15. Verfahren nach Anspruch 14, **gekennzeichnet durch** das System, welches eine Anzahl von RSVP-Mitteilungen, die die gleiche QoS-Scrhamantik haben, zu einem einzigen LSP sammelt.

16. Verfahren nach Anspruch 14 oder 15, **dadurch gekennzeichnet, dass** ein Ausgangs-LSR des Hauptnetzes einen Zuteilungsentwurf für eine RSVP-Sitzung aus einem Satz möglicher Zuteilungsentwürfe wählt, wobei eine RSVP-Sitzung durch einen eindeutigen Tupel identifiziert ist und durch die RSVP-Sitzung in Abhängigkeit von dem gewählten Zuteilungsentwurf einer oder mehrere LSPs erzeugt werden.

17. Verfahren nach Anspruch 16, **dadurch gekennzeichnet, dass** der Satz Zuteilungsentwürfe unter anderem aufweist Fixed Filter (FF), Wildcard Filter (WF) und Shared Explicit (SE).

18. Verfahren nach einem der Ansprüche 14 bis 17, **gekennzeichnet durch** LSRs, die LSPs errichten und **durch** eine Open Short Path First (OSPF)-Routing-Infrastrustruktur des Systems diese Knoten anzeigt.

19. Verfahren nach Anspruch 18, **gekennzeichnet durch** Ausgangs-LSRs, die entweder durch Bereichs-Grenz-Router (ABRs) oder Autonome System-Grenz-Router (ASBRs) oder Rand-LSRs mit anhängenden Subnetzen gebildet sind und **durch** die LSRs, die unterschiedliche Arten von Leitungswegen ankündigen, welche Forward Equivalence Class (FEC)-Elemente definieren.

20. Verfahren nach Anspruch 19, **gekennzeichnet durch** die ABR-Knoten, welche FECs erzeugen, die Adressen enthalten, welche für wenigstens Zwisrhenbereichs-Router oder Binnenbereichs-Router vorab festgelegt sind, und **durch** die Rand-LSR-Knoten, die FECs für die anhängenden Subnetze erzeugen.

21. Verfahren nach Anspruch 20, **gekennzeichnet durch** Rand-LSR Knoten, welche eine FEC für alle Adressen definieren, die in ihren anhängenden Subnetzen vorab festgelegten sind.

22. Verfahren nach einem der Ansprüche 14 bis 21, **gekennzeichnet durch** Ausgangs-LSRs, die Kennungsaufgliederung (LM) verwenden, um FEC-Kennungen an vorgeschaltete Nachbarn zu verteilen.

23. Verfahren nach Anspruch 22, **gekennzeichnet durch** jeden LSR auf einem Leitungsweg zu einem Eingangs-LSR, der bei Empfang einer LM-Mitteilung:
- prüft, ob eine Ankündigung gemäß dem Routen für eine FEC der nächste Sprung ist oder nicht; und entweder:
- für den Fall, dass es kein nächster Sprung ist, **durch** Antworten mit einer Kennungszurückziehungs-(LW)-Mitteilung eine nachgeschaltete Kennung zurückzieht; oder
- für den Fall, dass es der nächste Sprung ist, übergrüft, ob seine Router-ID der LSR-Wegvektor ist.

24. Verfahren nach Anspruch 23, **dadurch gekennzeichnet, dass** jeder der LSRs:
- für den Fall, dass die Router-ID in dem Vektor ist, die Kennungsaufgliederung ausrangiert, und an den Ankündiger eine NAK schickt; oder
- für den Fall, dass die Router-ID nicht in dem Vektor ist:
- eine vorgeschaltete Kennung für die FEC findet;
- sie mit der nachgeichalteten Kennung kreuzverbindet; und
- eine Kennungsaufgliederungs-(LM)-Mhteilung für die vorgeschaltete Kennung an alle vorgeschalteten Nachbarn schickt, wobei die LM-Mitteilung die LSRs-Router-ID der LSR-Weg-Vaktorliste zugefügt hat, und der Sprungzählwert auf einen Wert der empfangenen LM-Mitteilung plus 1 gesetzt ist.

25. Verfahren nach Anspruch 23 oder 24, **dadurch gekennzeichnet, dass** die Eingangs-LSRs bei Empfang der LMs:
- nur die Kennungen, die für das Weiteleiten verwendet werden, zurückhalten; und
- eine LSR-Weg-Vektorliste untersuchen, um zu überprüfen, ob eine Schleife errichtet worden ist.

26. Verfahren nach einem Ansprüche 23 bis 25, **dadurch gekennzeichnet, dass** die Eingangs-LSRs bei Empfang eines IP-Datenpaketes:
- den TTL-Wert basierend auf dem Sprungzielwert, der einer FEC zugeordnet ist, modifizieren;
- an das IP-Datenpaket einen Zusatzheader anhängen; und
- es auf einen virtuellen Kanal (VC), der der FEC zugeordnet ist, schicken.

27. Verfahren nach Anspruch 26, **dadurch gekennzeichnet, dass** der Zusatzheader:
- eine Kennung vom Wert 0 hat, die anzeigt, dass das Weiterleiten des IP-Datenpaketes auf einem IPv4-Header basiert;
- einen TTL-Wert gleich einem modifizierten TTL des IP-Header trägt;
und durch einen CoS (Class of Service)-Wert auf die beste Leistung gesetzt ist.

28. Verfahren nach Anspruch 26 oder 27, **dadurch gekennzeichnet, dass** die Ausgangs-LSRs bei Empfang eines markierten IP-Datenpaketes den Zusatzheader entfernen und das IP-Datenpaket an eine IP-Schicht für das weitere Weiterleiten liefern.

29. Verfahren nach einem der Ansprüche 14 bis 28, **gekennzeichnet durch** periodisches Wiederauffrischen der RSVP, PATH und RESV-Mitteilung.
